# EUROPEAN PATENT SPECIFICATION

(11) **EP 2 458 203 B1**
(45) Date of publication and mention of the grant of the patent: **22.04.2015**
(21) Application number: 11190483.5
(22) Date of filing: 24.11.2011
(51) Int. Cl.: F03D 9/02, F03D 7/02

(54) **A wind turbine having a hydraulic blade pitch system**
Windturbine mit hydraulischem Pitchsystem
Éolienne dotée d'un système de pas de pale hydraulique

(30) Priority: 26.11.2010 DK 201070511; 26.11.2010 US 417340 P
(43) Date of publication of application: 30.05.2012
(73) Proprietor: Vestas Wind Systems A/S, 8200 Aarhus N (DK)
(72) Inventor: Andersen, Jesper Lykkegaard, 8543 Hornslet (DK); Madsen, Jens Bay, 8000 Aarhus (DK)
(74) Representative: Vestas Patents Department

(56) References cited:
- WO-A2-2008/006020
- GB-A- 2 071 781
- US-A- 4 352 634
- US-B1- 6 604 907
- "Hydraulic Accumulators / Hydropneumatic Accumulators", Hydraulic Handbook 7th Edition, 31 December 2005 (2005-12-31), XP55022862, Retrieved from the Internet: URL:http://www.accumulators-hyd.com/accumu lators.html [retrieved on 2012-03-26]

## Description

### Field of the invention

The present invention relates to a wind turbine having a hydraulic blade pitch system.

### Background of the invention

Most wind turbines known in the art comprise a wind turbine tower and a wind turbine nacelle positioned on top of the tower. A wind turbine rotor with three wind turbine blades mounted on a hub is connected to the nacelle through a low speed shaft.

Also, most modern wind turbines control the load on the rotor by pitching the blades in and out of the incoming wind. The blades are pitched to optimize the power output or to protect the wind turbine from damaging overloads.

To perform the pitch, each blade is provided with a blade pitch system comprising a pitch bearing between the hub and the blade, and some kind of motor or actuator to provide the force for pitching the blade and maintaining it in a given position. Such blade pitch systems very often comprise hydraulic blade drives.

When a wind turbine is standing still, for instance in case of failure, each of the blades should preferably be pitched into its feather position, i.e. the position in which the blade is parallel to the wind, in order to reduce the drag produced by the blades.

However, in the case of some kinds of failure, the hydraulic pressure of the blade drives might be reduced or even completely missing and the control systems may be malfunctioning as well. Therefore, it is commonly known to use some kind of emergency feathering system, which disconnects ordinary operation and automatically pitches the blades to their feather positions, whenever a pilot pressure of the hydraulic blade pitch systems is lowered. The pitching of the blades performed by such emergency systems is typically driven by hydraulic pressures, which have been built up in hydraulic accumulators during normal operation of the blade pitch system.

Document US 6 604 907 B1 shows an individual blade adjustment system for wind turbines comprising two drive units which are joined to at least one movable rocker arm, wherein each drive unit produces a linear extension. A regulating cylinder adjusts a blade only in the angular range necessary for power or speed regulation, whereas, a disconnection cylinder moves the regulating cylinder by means of an adjustment mechanism into the regulating or disconnection position. Independent storage systems are associated with the disconnection and regulating cylinders such that the pressure supply of the regulating and disconnection cylinders can be separately disconnected.

Documents GB 2 071 781 A US 4 352 634 A show a wind turbine blade pitch control system including hydraulic actuators being supplied with hydraulic fluid from independent sources thereof for normal blade pitch adjustment and feathering.

Document WO 2008/006020 A shows conventional systems, methods and apparatuses for a wind turbine controller well known in the art.

It is an object of the present invention to improve emergency feathering systems of hydraulic pitch systems known in the art, especially with respect to the use of hydraulic accumulators in such systems.

### Brief description of the invention

The above described object is solved by a wind turbine in accordance with independent claim 1. The further dependent claims 2 to 6 define more advantageous embodiments of the wind turbine of claim 1.

The present invention relates to a wind turbine having a rotor with at least two blades and a blade pitch system for controlling the pitch angle of said blades, the blade pitch system comprising for each of said blades a hydraulic blade pitch drive comprising one or more hydraulic actuators and two or more hydraulic accumulators which are exclusively dedicated to the provision of hydraulic pressure for operation of the hydraulic blade pitch drive for that blade. Using multiple accumulators for each blade provides a redundancy in the system for each blade, which increases the safety of the system as the redundancy reduces significantly the risk of malfunction due to malfunction in other systems relating to other blades. This is particularly the case when the accumulators are coupled in parallel in that it in this configuration is possible to isolate a malfunctioning accumulator while still operating the remaining ones.

Furthermore, the use of more than one accumulator for the blade pitch system of a blade makes it possible to use off-the-shelf accumulators of a smaller size that are more easily fit into the hub or the nacelle and more easily replaced in case of malfunction. It should be noted that the accumulators may be used for providing hydraulic pressure for emergency as well as for ordinary operation of the blade pitch drive.

In an embodiment of the invention, said accumulators are pressurized during normal operation of the blade pitch system.

Using the hydraulic pressure under normal operation to pressurize the accumulators is a simple and reliable way of making sure that the accumulators are ready to be used, whenever it is needed.

In a further embodiment of the invention, said accumulators are connected to the pressure port(s) (P) of one or more valves used for controlling the movement of said one or more hydraulic actuators of the blade pitch system during ordinary operation of the wind turbine.

Connecting the accumulators to the pressure port(s) of one or more valves used for ordinary operation of the blade pitch system enables for using the accumulators dynamically for supporting the pump, which delivers the pressure to the hydraulic system. As a result thereof, the system may be driven by a smaller pump than otherwise necessary.

In an embodiment of the invention, said accumulators are arranged to provide the necessary hydraulic pressure for an emergency feathering system for a blade to turn the blade into its feather position, the accumulators being connected to said one or more hydraulic actuators of the blade pitch system through a separate set of valves.

The use of accumulators dedicated to a specific blade significantly reduces the risk that a malfunction in the pitch system for a given blade causes a malfunction in the pitch system for another blade as well.

In an embodiment of the invention, each of said accumulators is connected to said one or more hydraulic actuators of the blade pitch system through a separate set of valves.

Using a separate set of valves for each accumulator increases the redundancy of the system, as the dependency on proper function of a given valve is reduced.

In an embodiment of the invention, said accumulators are arranged in groups of one or more accumulators, each group being connected to the blade pitch system and a pilot circuitry thereof through a common set of valves.

Arranging the accumulators in groups connected to the rest of the system through a common set of valves reduces the number of components needed and, thus, is a more cost-efficient way of using multiple accumulators.

In an embodiment of the invention, the wind turbine further comprises one or more additional accumulators common to the hydraulic pitch systems of more than one blade of the wind turbine, said one or more additional accumulators being arranged to function as back-ups for the dedicated accumulators for one or more of the blades in case of failure thereof.

Having additional back-up accumulators increases the safety of the system, making the emergency feathering operation and, in some cases, even ordinary operation possible, even in case of malfunction of all or the majority of accumulators for a given blade.

In an embodiment of the invention, said hydraulic blade pitch drive comprises two or more hydraulic actuators.

Using multiple accumulators coupled in parallel for driving multiple hydraulic pitch cylinders is advantageous in that it hereby is possible to better adapt the actual capacity to the actual need and thereby reduce wear and increase the life of various components of the blade pitch system.

In an embodiment of the invention, said two or more hydraulic actuators are coupled in parallel.

By also coupling the pitch cylinders of a given blade in parallel it is possible to also isolate a malfunctioning pitch cylinder and thereby use the pressure provided by the two or more hydraulic accumulators more efficiently. Furthermore, by also coupling the pitch cylinders in parallel it is possible to better adapt the actual capacity to the actual need and thereby reduce wear and increase the life of various components of the blade pitch system.

### Figures

A few exemplary embodiments of the invention will be described in the following with reference to the figures, of which
- fig. 1: illustrates a large modern wind turbine as known in the art, seen from the front,
- fig. 2: illustrates a wind turbine rotor as known in the art, comprising three blades and seen from the front,
- fig. 3: illustrates a simplified cross section of a wind turbine nacelle as known in the art, seen from the side,
- fig. 4: is a diagram of main components of a hydraulic blade pitch system for a wind turbine blade as known in the art,
- fig. 5: is a diagram of main components of a hydraulic blade pitch system for a wind turbine blade according to a first embodiment of the invention, and
- fig. 6: is a diagram of main components of a hydraulic blade pitch system for a wind turbine blade according to a second embodiment of the invention.

### Detailed description of the invention

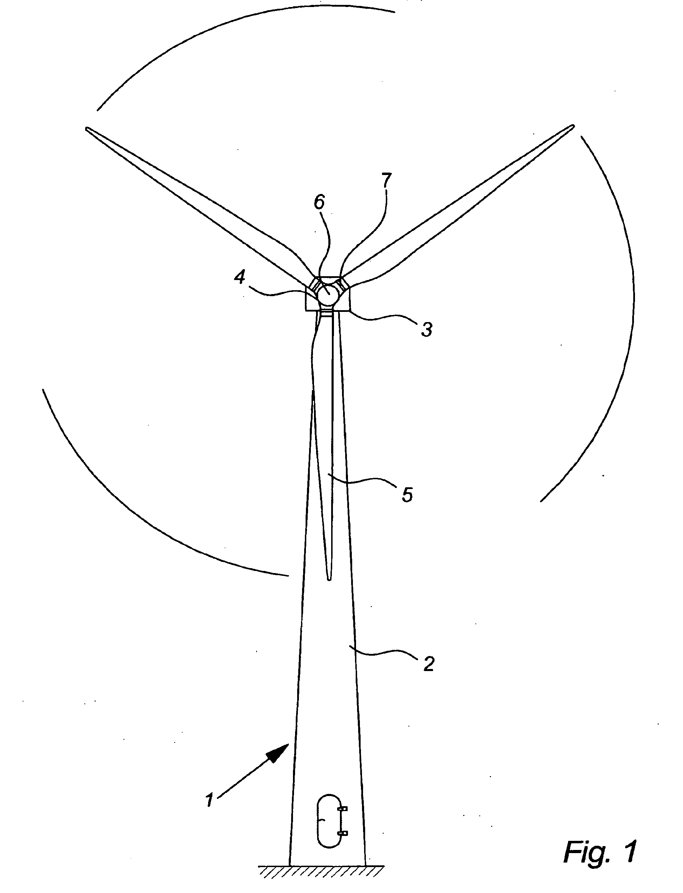

Fig. 1 illustrates a modern wind turbine 1 as known in the art comprising a tower 2 and a wind turbine nacelle 3 positioned on top of the tower 2. The wind turbine rotor 4, comprising three wind turbine blades 5 mounted on a hub 6, is connected to the nacelle 3 through a low speed shaft which extends out of the front of the nacelle 3.

Furthermore, the figure indicates that pitch bearings 7 are mounted near the roots of the blades 5.

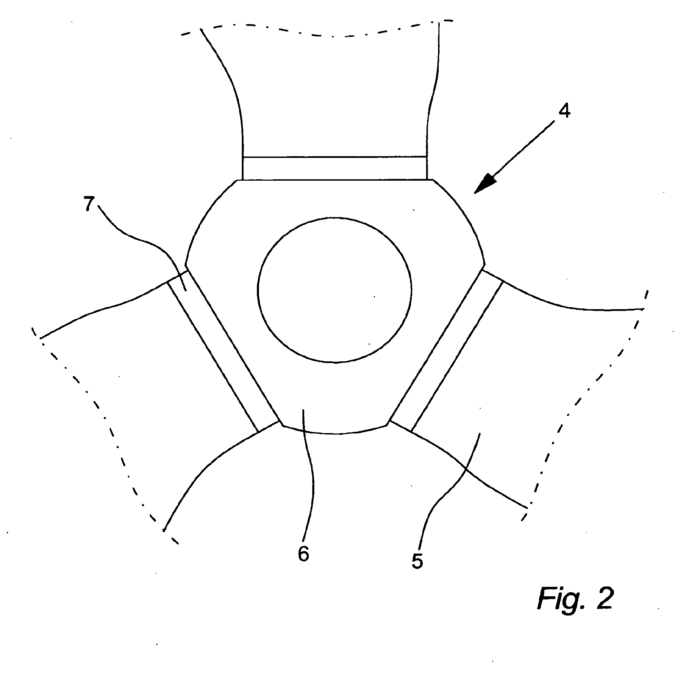

Fig. 2 illustrates a wind turbine rotor 4 as known in the art comprising a hub 6 and three blades 5 as seen from the front.

As illustrated, the pitch bearings 7 are arranged between the blades 5 and the hub 6 to enable the blades 5 to be rotated around their longitudinal axis and to transfer forces mainly from three different sources. The blades 5 (and the bearings 7 themselves, of course) are under constant influence of the force of gravitation. The direction of the gravitational force varies depending on the positions of the blades 5, inducing different loads on the pitch bearings 7. When the blades are in motion, the bearings 7 are also under influence of a centrifugal force, which mainly produces an axial pull in the bearings 7. Finally the bearings 7 are under influence of the wind load on the blades 5. This force is by far the greatest load on the bearings 7 and it produces a massive moment, which the bearings 7 have to stand.

The load on and from all the pitch bearings 7 has to be transferred to the hub 6 and further into the rest of the wind turbine 1, and each pitch bearing 7 must, at the same time, enable that the blade 5 can be pitched.

In the shown embodiment, the rotor 4 comprises three blades 5, but in other embodiments the rotor 4 could comprise two, four or more blades 5.

In the shown embodiment, the wind turbine 1 is a pitch regulated wind turbine 1, but in other embodiments the wind turbine could just as well be an active stall regulated wind turbine 1, since both pitch regulated wind turbines 1 and active stall regulated wind turbines 1 comprise a pitch mechanism for pitching the blades 5.

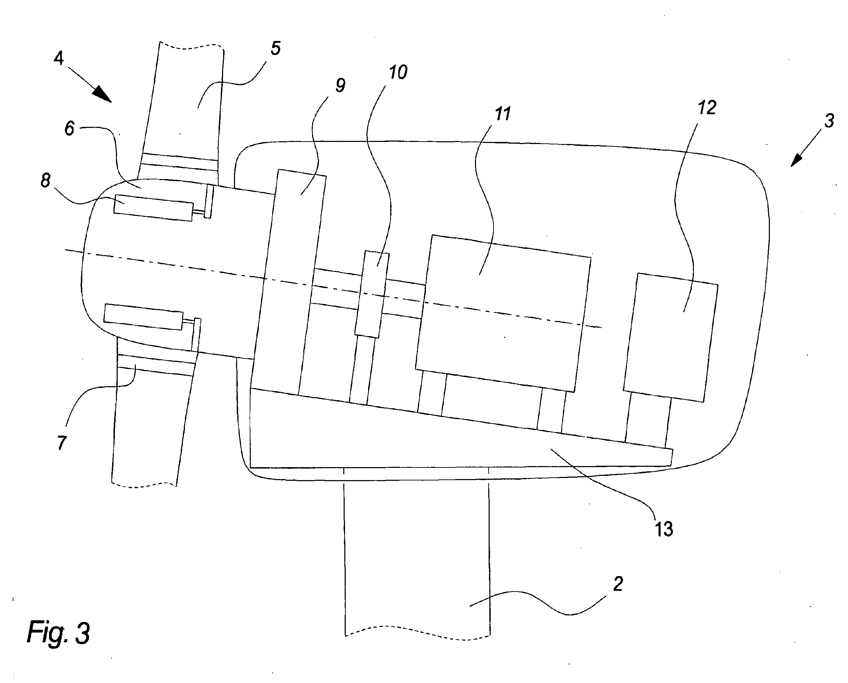

Fig. 3 illustrates a simplified cross section of a nacelle 3 of a prior art wind turbine 1 as seen from the side. Nacelles 3 exist in a multitude of variations and configurations, but in most cases the drive train in the nacelle 3 comprises one or more of the following components: a gearbox 9, a coupling (not shown), some sort of breaking system 10 and a generator 11. A nacelle 3 of a modern wind turbine 1 can also include a converter 12 (also called an inverter) and additional peripheral equipment such as further power handling equipment, control cabinets, hydraulic systems, cooling systems and more.

The weight of the entire nacelle 3 including the nacelle components 9, 10, 11, 12 is carried by a nacelle structure 13. The components 9, 10, 11, 12 are usually placed on and/or connected to this common load carrying nacelle structure 13. In the simplified embodiment shown, the load carrying nacelle structure 13 only extends along the bottom of the nacelle 3, e.g. in the form of a bed frame to which some or all of the components 9, 10, 11, 12 are connected. In other embodiments, the load carrying structure 13 could comprise a gear bell which could transfer the load of the rotor 4 to the tower 2 through a main bearing (not shown), or the load carrying structure 13 could comprise several interconnected parts, such as latticework.

In the illustrated embodiment, the blades 5 of the wind turbine 1 are connected to the hub 6 through pitch bearings 7 enabling the blades 5 to be rotated around their longitudinal axis. In this embodiment, the blade pitch drive 8 comprises means for rotating the blades 5 in the form of hydraulic actuators connected to the hub 6 and the respective blades 5.

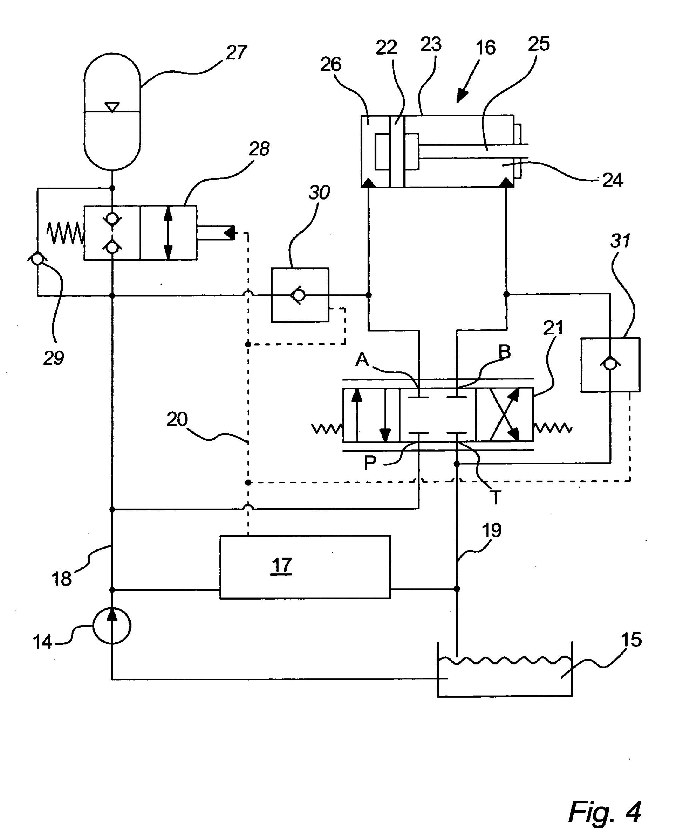

Fig. 4 is a diagram of main components of a hydraulic blade pitch system for a wind turbine blade 5 as known in the art, comprising a linear hydraulic actuator 16 with a piston 22 displaceably arranged within a cylinder 23 which is divided by the piston 22 into a piston rod chamber 24 or front chamber (the internal chamber comprising the piston rod 25) of the cylinder 23 and a bottom chamber 26 or rear chamber (the internal chamber which does not comprise the piston rod 25). The piston rod 25 is connected (not shown) to the hub 6 of the wind turbine rotor 4, and the cylinder 23 is connected (not shown) to the blade 5 so as to effect an angular displacement of the blade 5 when liquid under pressure is applied to the piston rod chamber 24 or to the bottom chamber 26.

The flow of pressurised liquid from the hydraulic pump 14 to the linear hydraulic actuator 16 is controlled by means of a proportional hydraulic valve 21. The hydraulic pump 14 may be arranged for the entire system for providing pressurised liquid to the hydraulic blade pitch systems for all of the blades 5, or it may be arranged separately for each blade 5 as shown in Fig. 4 as well as for the central system.

The proportional hydraulic valve 21 has a pressure port P connected via the pressure line 18 to the hydraulic pump 14, and a tank port T connected via the tank line 19 to the low pressure tank 15. One actuator port A of the valve 21 connects to the bottom chamber 26 of the hydraulic linear actuator 16, whereas the other actuator port B is connected to the piston rod chamber 24 of the hydraulic linear actuator 16.

The proportional hydraulic valve 21 is biased by springs towards a neutral centre position in which the ports are closed and no liquid flows through the valve. The proportional hydraulic valve 21 may be shifted in one direction by means of solenoids or a separately controlled pressurised pilot liquid so that the pressure port P is gradually opened towards the first actuator port A and the tank port T is gradually opened towards the second actuator port B, or the valve 21 may be shifted in the opposite direction causing the pressure port P to be gradually opened towards the second actuator port B and the tank port T to be gradually opened towards the first actuator port A. Thus, the operation of the proportional hydraulic valve 21 may be used to selectively move the piston 22 in one or the other direction so as to pitch the blade 5 with a controlled and variable pitch speed in one direction or the other.

In case an emergency feathering operation is initiated from the pilot circuitry 17 by lowering of the pilot pressure in the pilot pressure line 20, pressurized hydraulic liquid from a hydraulic accumulator 27, which during ordinary operation of the wind turbine 1 is charged with pressurized liquid from the pressure line 18, is used for driving the piston 22 of the cylinder 23, thus turning the blade 5 towards its feathered position. The lowering of the pilot pressure in the pilot pressure line 20 will close the accumulator valve 28 and only allow liquid to leave the accumulator 27 through the accumulator check valve 29. Under normal operation, the emergency supply check valve 30 is closed by means of the pilot pressure and, during the emergency feathering operation, it is opened for liquid flow from the accumulator 27 to the bottom chamber 26 of the cylinder 23. Likewise, the emergency drain check valve 31 will be opened for allowing the hydraulic liquid in the piston rod chamber 24 of the cylinder 23 to drain directly to the tank 15 bypassing the proportional hydraulic valve 21. Thus, the pressurized liquid in the hydraulic accumulator 27 will change the position of the piston 22 and, through the piston rod 25, turn the blade 5 towards the feathered position.

It is evident to the skilled person that the system is shown only schematically in Fig. 4 and that a number of variations to the system would be possible, e.g. including means to control the flow rate of the liquid from the accumulator 27 to the bottom chamber 26 of the cylinder 23 in order to control the angular speed of the feathering of the blade.

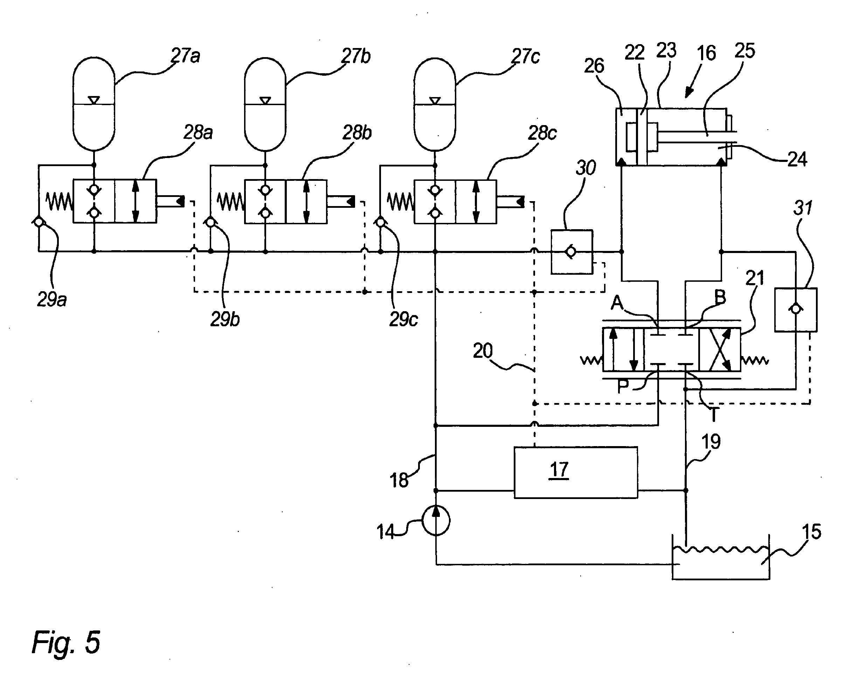

Fig. 5 is a diagram of main components of a hydraulic blade pitch system for a wind turbine blade 5 according to a first embodiment of the invention. In this embodiment, three accumulators 27a, 27b, 27c are used for the emergency feathering system for a single blade 5. Each of the accumulators 27a, 27b, 27c, which will typically be physically located in the hub, is connected to the blade pitch system and the pilot circuitry 17 thereof through an accumulator valve 28a, 28b, 28c and an accumulator check valve 29a, 29b, 29c. The basic function of each accumulator 27a, 27b, 27c and the corresponding accumulator valve 28a, 28b, 28c and accumulator check valve 29a, 29b, 29c during normal operation and during an emergency feathering operation is similar to the function of the similar components 27, 28, 29 in the blade pitch system shown in fig. 4.

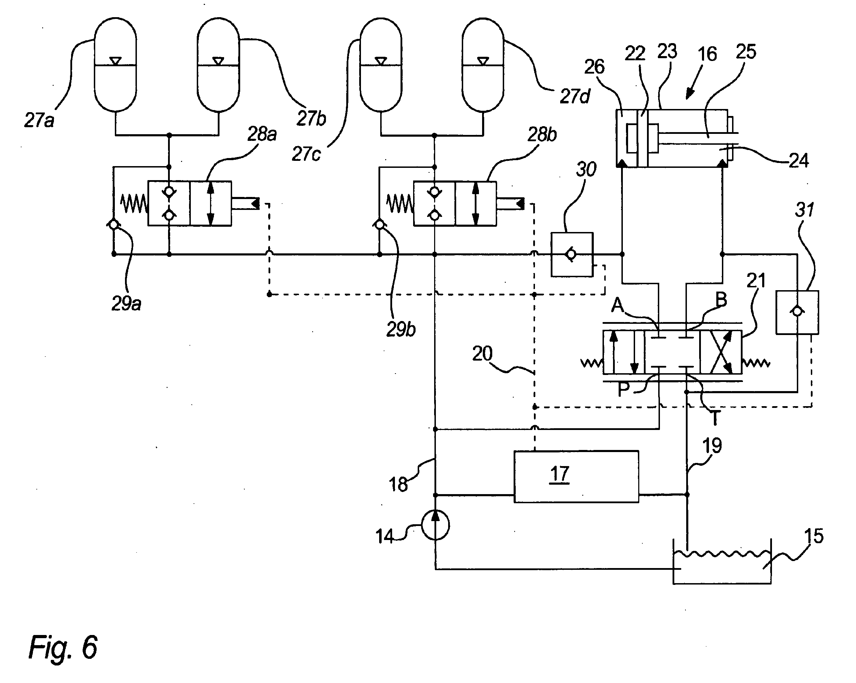

In fig. 6 is shown a diagram of main components of a hydraulic blade pitch system for a wind turbine blade 5 according to a second embodiment of the invention in which a plurality of accumulators 27a, 27b, 27c, 27d are used for the emergency feathering system for a single blade 5. This figure illustrates how the accumulators 27a, 27b, 27c, 27d may be arranged in groups, the accumulators 27a-27b, 27c-27d in each groups sharing a common accumulator valve 28a, 28b and a common accumulator check valve 29a, 29b. In the shown embodiment, the first group includes the accumulators 27a and 27b along with the accumulator valve 28a and the accumulator check valve 29a, whereas the second group includes the accumulators 27c and 27d along with the accumulator valve 28b and the accumulator check valve 29b. The basic function of each group of components is similar to the function of the similar components 27, 28, 29 in the blade pitch system shown in fig. 4.

### List of reference numbers

- 1.: Wind turbine
- 2.: Tower
- 3.: Nacelle
- 4.: Rotor
- 5.: Blade
- 6.: Hub
- 7.: Pitch bearing
- 8.: Blade pitch drive
- 9.: Gearbox
- 10.: Brake
- 11.: Generator
- 12.: Converter
- 13.: Nacelle structure
- 14.: Hydraulic pump
- 15.: Tank
- 16.: Linear hydraulic actuator for a wind turbine blade
- 17.: Pilot circuitry
- 18.: Pressure line
- 19.: Tank line
- 20.: Pilot pressure line
- 21.: 4/3-way proportional hydraulic valve
- 22.: Piston
- 23.: Cylinder
- 24.: Piston rod chamber
- 25.: Piston rod
- 26.: Bottom chamber
- 27.: Hydraulic accumulator
- 27a.: First hydraulic accumulator
- 27b.: Second hydraulic accumulator
- 27c.: Third hydraulic accumulator
- 27d.: Fourth hydraulic accumulator
- 28.: Accumulator valve
- 28a.: First accumulator valve
- 28b.: Second accumulator valve
- 28c.: Third accumulator valve
- 29.: Accumulator check valve
- 29a.: First accumulator check valve
- 29b.: Second accumulator check valve
- 29c.: Third accumulator check valve
- 30.: Emergency supply check valve
- 31.: Emergency drain check valve

- P.: Pressure port of proportional hydraulic valve
- A.: First actuator port of proportional hydraulic valve
- B.: Second actuator port of proportional hydraulic valve
- T.: Tank port of proportional hydraulic valve

## Claims

1. A wind turbine (1) having a rotor (4) with at least two blades (5), a blade pitch system for controlling the pitch angle of said blades during a normal operation and an emergency feathering system configured to disconnect normal operation and to automatically pitch said blades (5) to their feathering positions during an emergency feathering operation,
the blade pitch system comprising for each of said blades a hydraulic blade pitch drive (8) comprising one or more hydraulic actuators (16) and a hydraulic pump (14) for providing pressurised liquid to said hydraulic actuators (16) during a normal operation,
the emergency feathering system comprising a pilot circuitry (17) for initiating the emergency feathering operation and two or more hydraulic accumulators (27a, 27b, 27c, 27d) which are exclusively dedicated to the provision of hydraulic pressure for operation of the hydraulic blade pitch drive (8) for bringing said blades (5) to their feathering positions during the emergency feathering operation,
wherein said hydraulic accumulators (27a, 27b, 27c, 27d) are arranged in groups of one or more accumulators (27a, 27b, 27c, 27d),
**characterized by**
each group being connected to the blade pitch system and to the pilot circuitry (17) thereof through a common set of valves (28a, 29a; 28b, 29b), each common set of valves allowing pressurizing the respective connected group during the normal operation of the blade pitch system by the hydraulic pump (14) and allowing liquid to leave the respective connected group during the emergency feathering operation.

2. A wind turbine according to claim 1, wherein said two or more hydraulic accumulators are coupled in parallel.

3. A wind turbine according to claim 1 or 2, wherein said accumulators are connected to the pressure port(s) (P) of one or more valves (21) used for controlling the movement of said one or more hydraulic actuators (16) of the blade pitch system during ordinary operation of the wind turbine.

4. A wind turbine according to any of the preceding claims, wherein said accumulators are arranged to provide the necessary hydraulic pressure for an emergency feathering system for a blade to turn the blade into its feather position, the accumulators being connected to said one or more hydraulic actuators (16) of the blade pitch system through a separate set of valves.

5. A wind turbine according to any of the preceding claims, further comprising one or more additional accumulators common to the hydraulic pitch systems of more than one blade of the wind turbine, said one or more additional accumulators being arranged to function as back-ups for the dedicated accumulators for one or more of the blades in case of failure thereof.

6. A wind turbine according to any of the preceding claims, wherein said two or more hydraulic actuators (16) are coupled in parallel.

## Patentansprüche

1. Eine Windturbine (1), die einen Rotor (4) mit mindestens zwei Blättern (5), ein Blatteinstellsystem zum Regeln des Einstellwinkels der Blätter während eines normalen Betriebs und ein Notfallfahnenstellungssystem besitzt, das konfiguriert ist, um den normalen Betrieb zu trennen und die Blätter (5) während eines Notfallfahnenstellungsbetriebs automatisch in ihre Fahnenstellungspositionen einzustellen,
wobei das Blatteinstellsystem für jedes der Blätter einen hydraulischen Blatteinstellantrieb (8) umfasst, der ein oder mehrere hydraulische Stellglieder (16) und eine hydraulische Pumpe (14) zum Bereitstellen von druckbeaufschlagter Flüssigkeit für die hydraulischen Stellglieder (16) während eines normalen Betriebs umfasst,
wobei das Notfallfahnenstellungssystem eine Pilotschaltung (17) zum Einleiten des Notfallfahnenstellungsbetriebs und zwei oder mehrere hydraulische Speicher (27a, 27b, 27c, 27d) umfasst, die ausschließlich der Bereitstellung von hydraulischem Druck für den Betrieb des hydraulischen Blatteinstellantriebs (8) gewidmet sind, um die Blätter (5) während des Notfallfahnenstellungsbetriebs in ihre Fahnenstellungspositionen zu bringen,
wobei die hydraulischen Speicher (27a, 27b, 27c, 27d) in Gruppen von einem oder mehreren Speichern (27a, 27b, 27c, 27d) angeordnet sind,
**dadurch gekennzeichnet, dass**
jede Gruppe mit dem Blatteinstellsystem und mit der Pilotschaltung (17) davon über einen gemeinsamen Satz Ventile (28a, 29a; 28b, 29b) verbunden ist, wobei jeder gemeinsame Satz Ventile während des normalen Betriebs des Blatteinstellsystems das Druckbeaufschlagen der jeweiligen verbundenen Gruppe durch die hydraulische Pumpe (14) erlaubt und während des Notfallfahnenstellungsbetriebs der Flüssigkeit erlaubt, die jeweilige verbundene Gruppe zu verlassen.

2. Windturbine gemäß Anspruch 1, wobei die zwei oder mehreren hydraulischen Speicher parallel gekoppelt sind.

3. Windturbine gemäß Anspruch 1 oder 2, wobei die Speicher mit dem (den) Druckanschluss (-anschlüssen) (P) von einem oder mehreren Ventilen (21) verbunden sind, das (die) verwendet wird (werden), um die Bewegung der einen oder mehreren hydraulischen Stellglieder (16) des Blatteinstellsystems während des gewöhnlichen Betriebs der Windturbine zu regeln.

4. Windturbine gemäß einem der vorhergehenden Ansprüche, wobei die Speicher angeordnet sind, um den notwendigen hydraulischen Druck für ein Notfallfahnenstellungssystem für ein Blatt bereitzustellen, um das Blatt in seine Fahnenstellungsposition zu drehen, wobei die Speicher mit den einen oder mehreren hydraulischen Speichern (16) des Blatteinstellsystems durch einen separaten Satz Ventile verbunden sind.

5. Windturbine gemäß einem der vorhergehenden Ansprüche, die ferner einen oder mehrere zusätzliche Speicher umfasst, die den hydraulischen Einstellsystemen von mehr als einem Blatt der Windturbine gemein sind, wobei die eine oder mehreren zusätzlichen Speicher angeordnet sind, um als Reserven für die gewidmeten Speicher für eines oder mehrere der Blätter im Fall des Ausfalls von diesen zu fungieren.

6. Windturbine gemäß einem der vorhergehenden Ansprüche, wobei die zwei oder mehreren hydraulischen Speicher (16) parallel gekoppelt sind.

## Revendications

1. Turbine d'éolienne (1) ayant un rotor (4) avec au moins deux pales, un système de pas de pale pour commander l'angle de pas desdites pales au cours d'un fonctionnement normal et un système de variation de pas d'urgence configuré pour débrancher le fonctionnement normal et faire passer automatiquement lesdites pales (5) dans leurs positions de variation de pas au cours d'une opération de variation de pas d'urgence,
le système de pas de pale comprenant pour chacune desdites pales une commande de pas de pale hydraulique (8) comprenant un ou plusieurs actionneurs hydrauliques (16) et une pompe hydraulique (14) pour fournir un liquide sous pression auxdits actionneurs hydrauliques (16) pendant un fonctionnement normal,
le système de variation de pas d'urgence comprenant une circuiterie pilote (17) pour initier l'opération de variation de pas d'urgence et deux accumulateurs hydrauliques (27a, 27b, 27c, 27d) ou plus qui sont exclusivement dédiés à la fourniture d'une pression hydraulique pour le fonctionnement de la commande de pas de pale hydraulique (8) pour amener lesdites pales (5) dans leurs positions de variation de pas au cours de l'opération de variation de pas d'urgence,
dans lequel lesdits accumulateurs hydrauliques (27a, 27b, 27c, 27d) sont aménagés en groupes d'un ou plusieurs accumulateurs (27a, 27b, 27c, 27d), caractérisée en ce qui :
chaque groupe est raccordé au système de pas de pale et à la circuiterie pilote (17) de celui-ci via un ensemble commun de soupapes (28a, 29a ; 28b, 29b), chaque ensemble commun de soupapes permettant de placer sous pression le groupe respectif raccordé au cours du fonctionnement normal du système de pas de pale par la pompe hydraulique (14) et permettant au liquide de quitter le groupe respectif raccordé au cours de l'opération de variation de pas d'urgence.

2. Turbine d'éolienne selon la revendication 1, dans laquelle lesdits deux ou plusieurs accumulateurs hydrauliques sont couplés en parallèle.

3. Turbine d'éolienne selon la revendication 1 ou 2, dans laquelle lesdits accumulateurs sont raccordés à l'orifice de pression ou aux orifices de pression (P) d'une ou plusieurs soupapes (21) utilisées pour commander le mouvement des un ou plusieurs actionneurs hydrauliques (16) du système de pas de pale au cours d'un fonctionnement ordinaire de la turbine d'éolienne.

4. Turbine d'éolienne selon l'une quelconque des revendications précédentes, dans laquelle lesdits accumulateurs sont aménagés pour fournir la pression hydraulique nécessaire pour un système de variation de pas d'urgence pour une pale afin de faire tourner la pale dans sa position de variation de pas, les accumulateurs étant raccordés auxdits un ou plusieurs actionneurs hydrauliques (16) du système de pas de pale via un ensemble séparé de soupapes.

5. Turbine d'éolienne selon l'une quelconque des revendications précédentes, comprenant en outre un ou plusieurs accumulateurs supplémentaires communs aux systèmes de pas hydrauliques de plus d'une pale de la turbine d'éolienne, lesdits un ou plusieurs accumulateurs supplémentaires étant aménagés pour fonctionner comme réserves pour les accumulateurs dédiés pour une ou plusieurs des pales dans le cas d'une défaillance de celles-ci.

6. Turbine d'éolienne selon l'une quelconque des revendications précédentes, dans laquelle lesdits deux ou plusieurs actionneurs hydrauliques (16) sont couplés en parallèle.
